# EUROPEAN PATENT SPECIFICATION

(11) **EP 0 603 880 B1**
(45) Date of publication and mention of the grant of the patent: **17.05.2000**
(21) Application number: 93120785.6
(22) Date of filing: 23.12.1993
(51) Int. Cl.: G06F 9/44, G06F 9/46

(54) **Method and system for aggregating objects**
Verfahren und Anordnung zur Zusammenbindung von Objekten
Procédé et dispositif d'agrégation d'objets

(30) Priority: 24.12.1992 US 996552
(43) Date of publication of application: 29.06.1994
(73) Proprietor: MICROSOFT CORPORATION, Redmond, Washington 98052-6399 (US)
(72) Inventor: Hodges, Douglas C., Redmond, Washington 98053 (US); Koppolu, Srinivasa R., Redmond, Washington 98053 (US); MacKichan, Barry B., Bainbridge Island, Washington 98110 (US); Wittenberg, Craig, Mercer Island, Washington 98040 (US)
(74) Representative: Grünecker, Kinkeldey, Stockmair & Schwanhäusser Anwaltssozietät

(56) References cited:
- EP-A- 0 474 339
- ECOOP-OOPSLA WORKSHOP ON OBJECT-BASED CONCURRENT PROGRAMMING, OTTAWA, ONT., CANADA, 21-22 OCT. 1990, vol. 2, no. 2, OOPS MESSENGER, APRIL 1991, USA, pages 31-36, CHIEN A A 'Concurrent Aggregates: using multiple-access data abstractions to manage complexity in concurrent programs'
- THE 8TH INTERNATIONAL CONFERENCE ON DISTRIBUTED COMPUTING SYSTEMS, 13 June 1988 SAN JOSE, CA, USA, pages 18-24, K. SHIMIZU ET AL 'Hierarchical object groups in distributed operating systems'
- 11TH INTERNATIONAL CONFERENCE ON DISTRIBUTED COMPUTING SYSTEMS (CAT. NO.91CH2996-7), ARLINGTON, TX, USA, 20-24 MAY 1991, ISBN 0-8186-2144-3, 1991, LOS ALAMITOS, CA, USA, IEEE COMPUT. SOC. PRESS, USA, pages 73-80, HAILPERN B ET AL 'Dynamic reconfiguration in an object-based programming language with distributed shared data'

## Description

### Technical Field

This invention relates generally to a computer method and system of implementing interfaces to objects and, more specifically, to a method and system for aggregating objects.

### Background of the Invention

As computer software systems increase in sophistication, the cost of developing the software increases. To minimize the cost of software development, developers often share code. Prior development efforts use three types of code sharing: (1) source code sharing, (2) compiled code sharing, and (3) code sharing through inheritance.

Source and compiled code sharing have been widely used for many years. Source code sharing refers to the use of the same source code by various computer programs or by various versions of the same computer program. For example, a spreadsheet program typically includes source code to control the displaying of a spreadsheet. If a word processing program allows the embedding of a spreadsheet within a document, then the word processing program may use the same (or slightly modified) source code to display the embedded spreadsheet object. Source code sharing is typically used by a single developer who develops multiple computer programs. For competitive reasons, developers typically do not share their source code with other developers. Moreover, even if the developer does share source code, the recipient of source code typically modifies the source code and thus two versions of the source code are maintained.

Compiled code sharing refers to the use of the same compiled code by various computer programs. The compiled code is typically stored in a static or dynamic link library. Compiled code stored in a static link library is shared then a computer program is linked before execution. Compiled code stored in a dynamic link library is shared when a computer program is linked during execution. The developer of a spell checking program, for example, may share compiled code by compiling the program and storing the compiled code in a static link library. The static link library can then be distributed to developers of word processing programs who can link the compiled spell checking code into their word processing program. The developer of the spell checking program typically needs to modify the compiled code to meet special requirements of certain developers. These modifications tend to increase the complexity (and size) of the compiled code and may conflict with requirements of other recipients. Alternatively, the developer could distribute multiple versions of the static link library. However, the maintenance of multiple versions can be costly.

Object-oriented programming techniques employ a concept referred to as inheritance to allow the sharing of code. To understand the concept of inheritance, it is helpful to understand object-oriented programming techniques generally. Two common characteristics of object-oriented programming languages are support for data encapsulation and data type inheritance. Data encapsulation refers to the binding of functions and data. Inheritance refers to the ability to declare a data type in terms of other data types.

Reference is made to a document in the prior art: ECOOP-OOPSLA WORKSHOP ON OBJECT BASED CONCURRENT PROGRAMMING, OTTAWA, ONTARIO, CANADA, 21-22 Oct. 1990, vol. 2, no. 2, OOPS MESSENGER, APRIL 1991, USA, pages 31-36, CHIEN A A: "Concurrent Aggregates: using multiple-access data abstractions to manage complexity in concurrent programs". This document describes aggregate objects and also the access of parts of an aggregate objects. Concurrent aggregates allows programmers to build hierarchical abstractions without serialization.

In the C++ language, object-oriented techniques are supported through the use of classes. A class is a user-defined type. A class declaration describes the data members and function members of the class. For example, the following declaration defines data members and a function member of a class named CIRCLE. 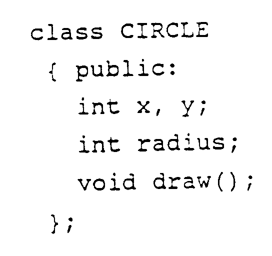 Variables x and y specify the center location of a circle and variable radius specifies the radius of the circle. These variables are referred to as data members of the class CIRCLE. The function draw is a user-defined function that draws the circle of the specified radius at the specified location. The function draw is referred to as a function member of class CIRCLE. The data members and function members of a class are bound together in that the function operates on an instance of the class. An instance of a class is also called an object of the class.

In the syntax of C++, the following statement declares the objects a and b to be of type class CIRCLE.
CIRCLE a, b;
This declaration causes the allocation of memory for the objects a and b. The following statements assign data to the data members of objects a and b.
- a.x: = 2;
- a.y: = 2;
- a.radius: = 1;
- b.x: = 4;
- b.y: = 5;
- b.radius: = 2;
The following statements are used to draw the circles defined by objects a and b.
a.draw();
b.draw();

A derived class is a class that inherits the characteristics--data members and function members--of its base classes. For example, the following derived class CIRCLE_FILL inherits the characteristics of the base class CIRCLE. 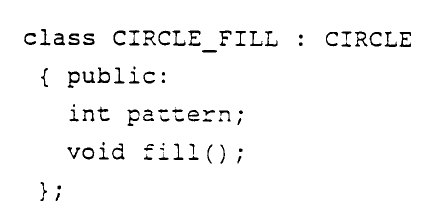 This declaration specifies that class CIRCLE_FILL includes all the data and function members that are in class CIRCLE in addition to those data and function members introduced in the declaration of class CIRCLE_FILL, that is, data member pattern and function member fill. In this example, class CIRCLE_FILL has data members x, y, radius, and pattern and function members draw and fill. Class CIRCLE_FILL is said to "inherit" the characteristics of class CIRCLE. A class that inherits the characteristics of another class is a derived class (e.g., CIRCLE_FILL). A class that does not inherit the characteristics of another class is a primary (root) class (e.g., CIRCLE). A class whose characteristics are inherited by another class is a base class (e.g., CIRCLE is a base class of CIRCLE_FILL). A derived class may inherit the characteristics of several classes, that is, a derived class may have several base classes. This is referred to as multiple inheritance.

A derived class may specify that a base class is to be inherited virtually. Virtual inheritance of a base class means that only one instance of the virtual base class exists in the derived class. For example, the following is an example of a derived class with two nonvirtual base classes.
class CIRCLE_1 : CIRCLE {...};
class CIRCLE_2 : CIRCLE {...};
class PATTERN : CIRCLE_1, CIRCLE_2{...};
In this declaration class PATTERN inherits class CIRCLE twice nonvirtually through classes CIRCLE_1 and CIRCLE_2. There are two instances of class CIRCLE in class PATTERN.

The following is an example of a derived class with two virtual base classes.
class CIRCLE_1 : virtual CIRCLE {...};
class CIRCLE_2 : virtual CIRCLE {...};
class PATTERN: CIRCLE_1, CIRCLE_2{...};
The derived class PATTERN inherits class CIRCLE twice virtually through classes CIRCLE_1 and CIRCLE_2. Since the class CIRCLE is virtually inherited twice, there is only one object of class CIRCLE in the derived class PATTERN. One skilled in the art would appreciate virtual inheritance can be very useful when the class derivation is more complex.

A class may also specify whether its function members are virtual. Declaring that a function member is virtual means that the function can be overridden by a function of the same name and type in a derived class. In the following example, the function draw is declared to be virtual in classes CIRCLE and CIRCLE_FILL.

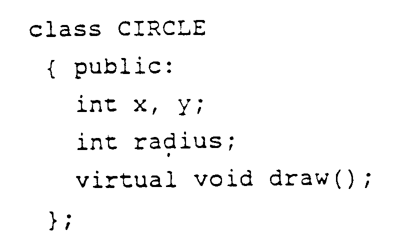

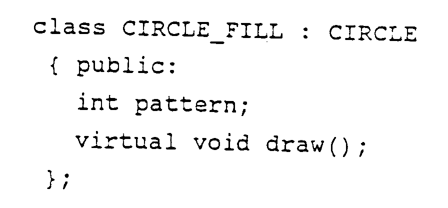

The C++ language provides a pointer data type. A pointer holds values that are addresses of objects in memory. Through a pointer, an object can be referenced. The following statement declares variable c_ptr to be a pointer on an object of type class CIRCLE and sets variable c_ptr to hold the address of object c.
CIRCLE *c_ptr;
c_ptr = &c;
Continuing with the example, the following statement declares object a to be of type class CIRCLE and object b to be of type class CIRCLE_FILL.
CIRCLE a;
CIRCLE_FILL b;
The following statement refers to the function draw as defined in class CIRCLE.
a.draw();
Whereas, the following statement refers to the function draw defined in class CIRCLE_FILL.
b.draw();
Moreover, the following statements type cast object b to an object of type class CIRCLE and invoke the function draw that is defined in class CIRCLE_FILL. 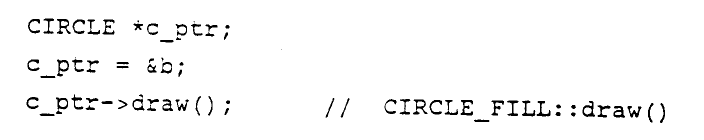 Thus, the virtual function that is called is function CIRCLE_FILL::draw.

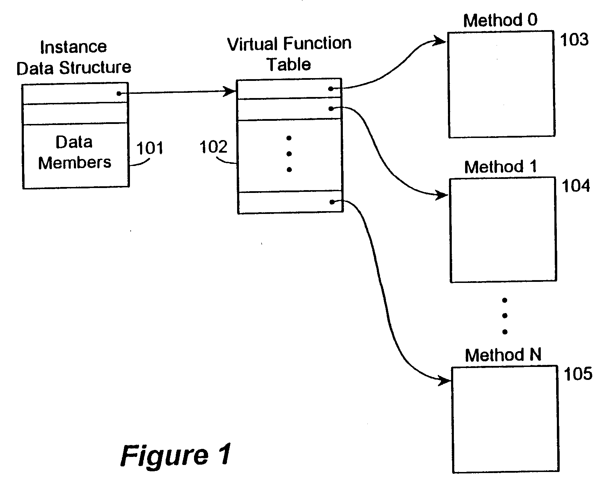

Figure 1 is a block diagram illustrating typical data structures used to represent an object. An object is composed of instance data (data members) and member functions, which implement the behavior of the object. The data structures used to represent an object comprise instance data structure 101, virtual function table 102, and the function members 103, 104, 105. The instance data structure 101 contains a pointer to the virtual function table 102 and contains data members. The virtual function table 102 contains an entry for each virtual function member defined for the object. Each entry contains a reference to the code that implements the corresponding function member. The layout of this sample object conforms to the model defined in U.S. Patent Application Serial No. 07/682,537, entitled "A Method for Implementing Virtual Functions and Virtual Bases in a Compiler for an Object Oriented Programming Language". In the following, an object will be described as an instance of a class as defined by the C++ programming language. One skilled in the art would appreciate that objects can be defined using other programming languages.

The inheritance of a class is a type of code sharing. A developer of a class can provide the implementation of the class to other developers. These other developers can then create classes that derive from the class provided. Thus, the function members of the provided class are shared. If, however, a class is inherited and a virtual function is overridden, then the testing of the overriding virtual function can be complex. The overriding virtual function can modify the state of the object in a way that affects non-overridden functions. Thus, each inherited function must be independently tested in conjunction with the testing of the overriding virtual function. To ameliorate the complexities of testing, the developers of a class implementation may distribute source code with the implementation. Unfortunately, the distribution of source code has the same drawbacks to sharing source code as discussed above.

An advantage of using object-oriented techniques is that these techniques can be used to facilitate the sharing of objects. In particular, object-oriented techniques facilitate the creation of compound documents. A compound document is a document that contains objects generated by various computer programs. (Typically, only the data members of the object and the class type are stored in a compound document.) For example, a word processing document that contains a spreadsheet object generated by a spreadsheet program is a compound document. A word processing program allows a user to embed a spreadsheet object (e.g., a cell) within a word processing document. To allow this embedding, the word processing program is compiled using the class definition of the object to be embedded to access function members of the embedded object. Thus, the word processing program would need to be compiled using the class definition of each class of objects that can be embedded in a word processing document. To embed an object of a new class into a word processing document, the word processing program would need to be recompiled with the new class definition. Thus, only objects of classes selected by the developer of the word processing program can be embedded. Furthermore, new classes can only be supported with a new release of the word processing program.

To allow objects of an arbitrary class to be embedded into compound documents, interfaces are defined through which an object can be accessed without the need for the word processing program to have access to the class definitions at compile time. An abstract class is a class in which a virtual function member has no implementation (pure). An interface is an abstract class with no data members and whose virtual functions are all pure.

The following class definition is an example definition of an interface. In this example, for simplicity of explanation, rather than allowing any class of object to be embedded in its documents, a word processing program allows spreadsheet objects to be embedded. Any spreadsheet object that provides this interface can be embedded, regardless of how the object is implemented. Moreover, any spreadsheet object, whether implemented before or after the word processing program is compiled, can be embedded. 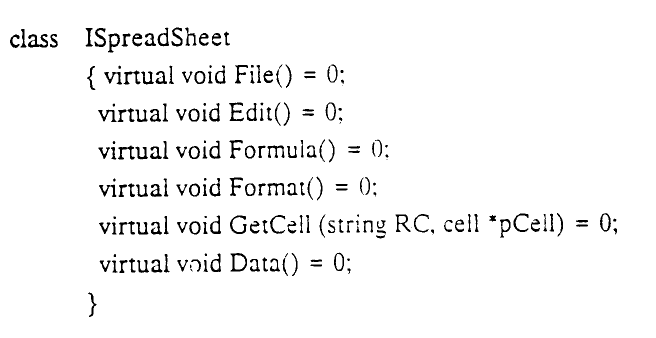 The developer of a spreadsheet program would need to provide an implementation of the interface to allow the spreadsheet objects to be embedded in a word processing document. When the word processing program embeds a spreadsheet object, the program needs access to the code that implements the interface for the spreadsheet object. To access the code, each implementation is given a unique class identifier. For example, a spreadsheet object developed by Microsoft Corporation may have a class identifier of "MSSpreadsheet," while a spreadsheet object developed by another corporation may have a class identifier of "LTSSpreadsheet." A persistent registry in each computer system is maintained that maps each class identifier to the code that implements the class. Typically, when a spreadsheet program is installed on a computer system, the persistent registry is updated to reflect the availability of that class of spreadsheet objects. So long as a spreadsheet developer implements each function member defined by the interface and the persistent registry is maintained, the word processing program can embed the developer's spreadsheet objects into a word processing document.

Various spreadsheet developers may wish, however, to implement only certain function members. For example, a spreadsheet developer may not want to implement database support, but may want to support all other function members. To allow a spreadsheet developer to support only some of the function members, while still allowing the objects to be embedded, multiple interfaces for spreadsheet objects are defined. For example, the interfaces IDatabase and IBasic may be defined for a spreadsheet object as follows. 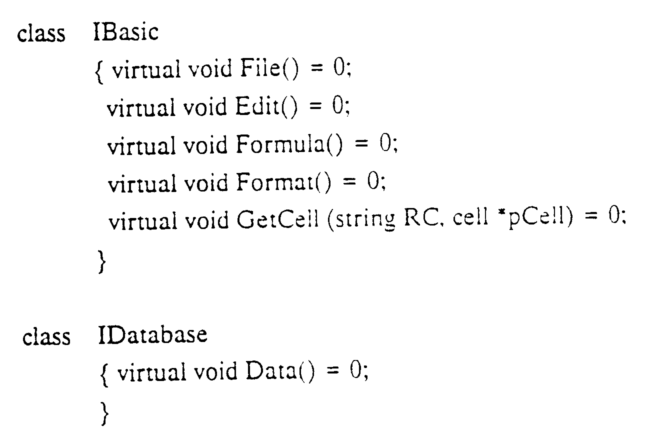 Each spreadsheet developer would implement the IBasic interface and, optionally, the IDatabase interface.

At run time, the word processing program would need to determine whether a spreadsheet object to be embedded supports the IDatabase interface. To make this determination, another interface is defined (that every spreadsheet object implements) with a function member that indicates which interfaces are implemented for the object. This interface is named IUnknown (and referred to as the unknown interface or the object management interface) and is defined as follows. 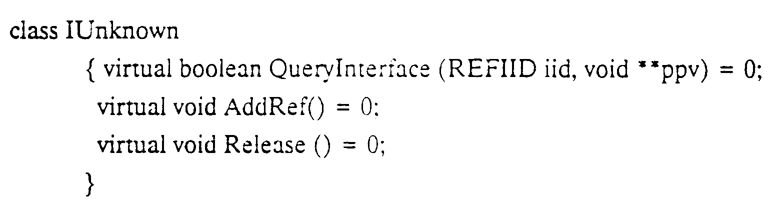 The IUnknown interface defines the function member (method) QueryInterface. The method QueryInterface is passed an interface identifier (e.g., "IDatabase") in parameter iid (of type REFIID) and returns a pointer to the implementation of the identified interface for the object for which the method is invoked in parameter ppv. If the object does not support the interface, then the method returns a false.

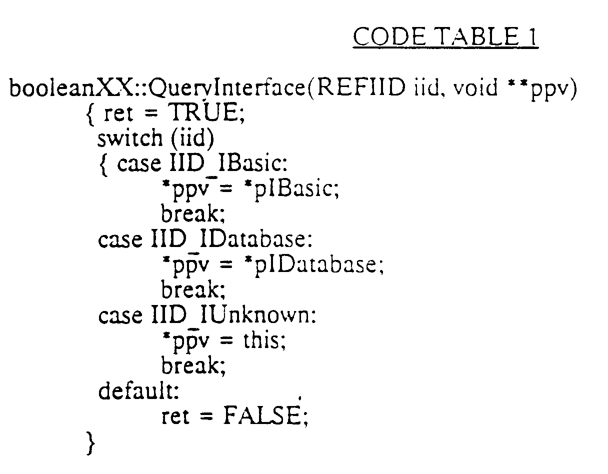

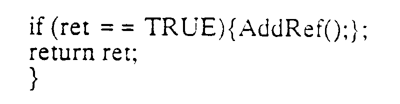

Code Table 1 contains C++ source code for a typical implementation of the method QueryInterface for class XX, which inherits the class IUnknown. If the spreadsheet object supports the IDatabase interface, then the method QueryInterface includes the appropriate case label within the switch statement. The variables pIBasic and pIDatabase point to a pointer to the virtual function tables of the IBasic and IDatabase interfaces, respectively. The method QueryInterface invokes to method AddRef (described below) to increment a reference count for the object of class XX when a pointer to an interface is returned.

**CODE TABLE 2**

| |
|---|
| void XX::AddRef(){refcount++;} |
| void XX::Release(){if(--refcount==0) delete this;} |

The interface IUnknown also defines the methods AddRef and Release, which are used to implement reference counting. Whenever a new reference to an interface is created, the method AddRef is invoked to increment a reference count of the object. Whenever a reference is no longer needed, the method Release is invoked to decrement the reference count of the object and, when the reference count goes to zero, to deallocate the object. Code Table 2 contains C++ source code for a typical implementation of the methods AddRef and Release for class XX, which inherits the class IUnknown.

The IDatabase interface and IBasic interface inherit the IUnknown interface. The following definitions illustrate the use of the IUnknown interface.

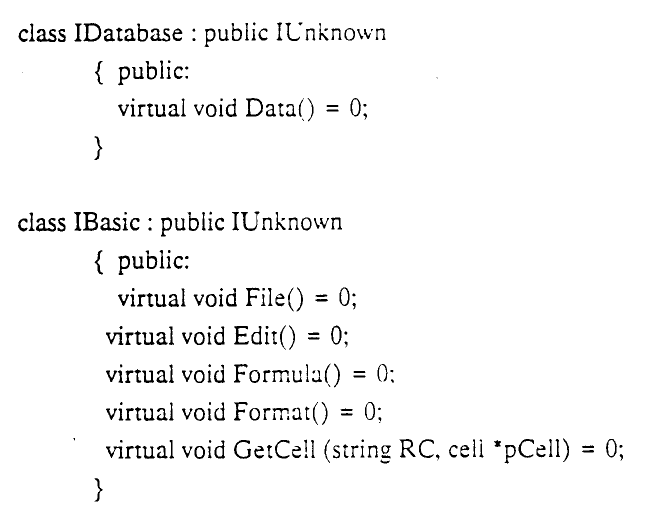

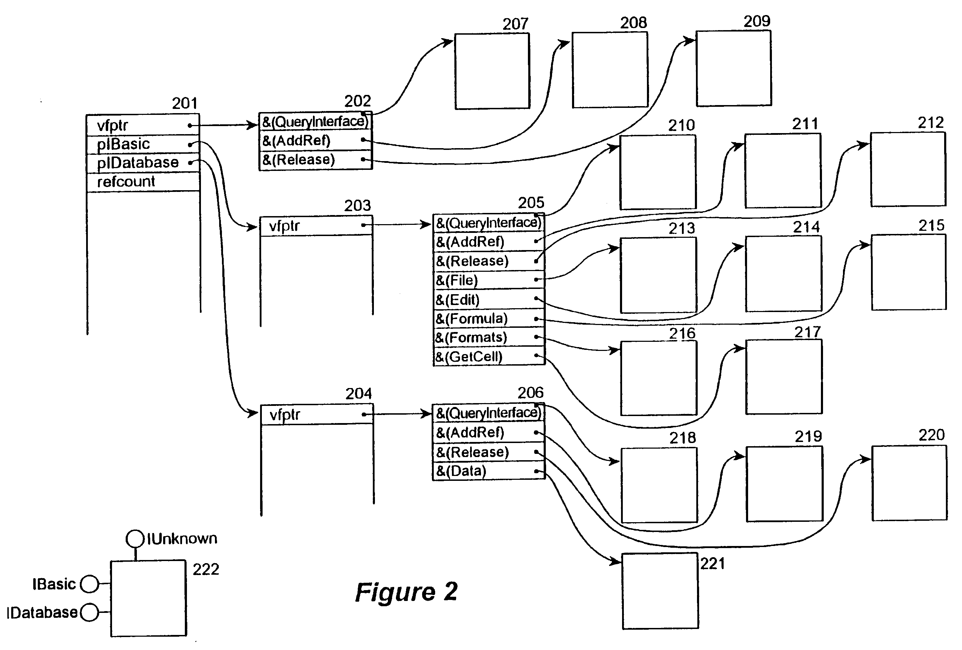

Figure 2 is a block diagram illustrating a sample data structure of a spreadsheet object. The spreadsheet object comprises object data structure 201, IBasic interface data structure 202, IDatabase interface data structure 204, the virtual function tables 202, 205, 206 and methods 207 through 221. The object data structure 201 contains a pointer to the virtual function table 202 and pointers to the IBasic and IDatabase interface. Each entry in the virtual function table 202 contains a pointer to a method of the IUnknown interface. The IBasic interface data structure 203 contains a pointer to the virtual function table 205. Each entry in the virtual function table 205 contains a pointer to a method of the IBasic interface. The IDatabase interface data structure 204 contains a pointer to the virtual function table 206. Each entry in the virtual function table 207 contains a pointer to a method of the IDatabase interface. Since the IBasic and IDatabase interfaces inherit the IUnknown interface, each virtual function table 205 and 206 contains a pointer to the methods QueryInterface, AddRef, and Release. In the following, an object data structure is represented by the shape 222 labelled with the interfaces through which the object may be accessed.

The following pseudocode illustrates how a word processing program determines whether a spreadsheet object supports the IDatabase interface. 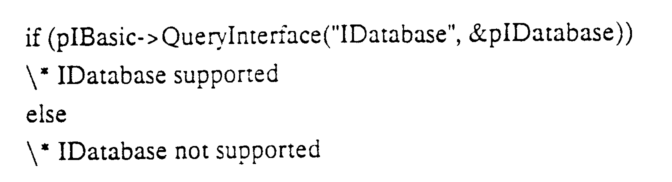 The pointer pIBasic is a pointer to the IBasic interface of the object. If the object supports the IDatabase interface, the method QueryInterface sets the pointer pIDatabase to point to the IDatabase data structure and returns true as its value.

Normally, an object can be instantiated (an instance of the object created in memory) by a variable declaration or by the "new" operator. However, both techniques of instantiation need the class definition at compile time. A different technique is needed to allow a word processing program to instantiate a spreadsheet object at run time. One technique provides a global function CreateInstanceXX, which is defined in the following.
static void CreateInstanceXX (REFIID iid, void **ppv) = 0;
The method CreateInstanceXX instantiates an object of class XX and returns a pointer ppv to the interface of the object designated by parameter iid.

### Summary of the Invention

It is an goal of the present invention to provide methods for enclosing an enclosed object and a system for aggregating objects.

It is another goal of the present invention to provide a method and system for enclosing an object within another object while exposing an interface of the enclosed object to a client of the enclosing object.

It is another goal of the present invention to provide a method and system for implementing an object that can be either enclosed within another object or not enclosed within another object without modifying the implementation of the object.

It is another goal of the present invention to provide a method and system for implementing an aggregate object so that a client is unaware that the object is an aggregate.

It is another goal of the present invention to provide a method and system for enclosing objects wherein the enclosed objects can itself be an enclosing object to an arbitrary level of enclosing. The invention is defined by the appended set of claims.

In a preferred embodiment, the method aggregates an enclosed object within an enclosing object. The enclosed object has an object management interface and one or more external interfaces, while the enclosing object has a controlling object management interface. Each interface exposed to a client by the aggregate object has a query function member for receiving an identifier of an interface and for returning a reference to the identified interface. The query function member of the controlling object management interface of the enclosing object receives an identifier of an interface exposed by the enclosing object and returns a reference to the exposed interface. A preferred method creates an instance of the enclosed object. The query function member of an exposed interface of the enclosed object receives an identifier of an interface, invokes the query function member of the controlling object management interface of the enclosing object passing the received identifier, and returns the reference returned by the invoked query function member of the controlling object management interface of the enclosing object as a reference to the identified interface.

In a preferred embodiment, the query function members of an enclosed object are implemented with knowledge of the external interfaces of the enclosed object and have no knowledge of interfaces (other than the controlling object management interface) of the enclosing object or other enclosed objects.

### Brief Description of the Drawings

Figure 1 is a block diagram illustrating typical data structures used to represent an object.
Figure 2 is a block diagram illustrating a sample data structure of a spreadsheet object.
Figure 3 is a block diagram showing an aggregate object.
Figure 4 is a block diagram of the data structure layout of an instance of an object of class O2.
Figure 5 is a block diagram of the data structure layout of an object of class O1.
Figures 6A and 6B are block diagrams illustrating the cooperation between an enclosing object and an enclosed object.

### Detailed Description of the Invention

The present invention is defined by the claims. In a preferred embodiment, an aggregate object provides a plurality of interfaces to its clients. The computer program that instantiates an object is referred to as a client. An aggregate object comprises one or more enclosed objects and an implementation of the IUnknown interface, which is referred to as the controlling IUnknown interface of the aggregate object. An aggregate object exposes to its clients its own interfaces and interfaces from the enclosed objects. The method QueryInterface of the controlling IUnknown interface returns a pointer to each interface exposed by the aggregate object. The aggregate object instantiates each enclosed object. This instantiation can be performed during construction of the aggregate object or can be postponed until an interface of the enclosed object is requested. Each enclosed object contains a pointer to the controlling IUnknown interface. The method QueryInterface of an exposed interface of an enclosed object is preferably implemented to invoke the method QueryInterface of an IUnknown interface. When the enclosed object is implemented, the developer typically has no knowledge of what interfaces the enclosing object may expose. Consequently, the method QueryInterface of an enclosed object invokes the method QueryInterface of the controlling IUnknown interface to retrieve a pointer to the requested interface. The method QueryInterface of the controlling IUnknown interface is typically implemented with knowledge of all the exposed interfaces. When an object is not enclosed, the controlling IUnknown interface is the IUnknown interface of the object. Conversely, when an object is enclosed, the controlling IUnknown interface is the IUnknown interface of the enclosing object.

In a preferred embodiment, an aggregate object maintains a reference count. When the aggregate object is instantiated, its reference count is set to one. The method QueryInterface of the controlling IUnknown increments the reference count when a reference is returned to the client. The method AddRef of an exposed interface of an enclosed object invokes the method AddRef of the controlling IUnknown interface to increment the reference count of the aggregate object. Similarly, the method Release of an exposed interface of an enclosed object invokes the method Release of the controlling IUnknown interface to decrement the reference count of the aggregate object and delete the aggregate object when the reference count equals zero. When an enclosed object is instantiated, the reference count of the enclosed object is set to one. When the aggregate object is deleted, the method Release of the IUnknown interface of each enclosed object is invoked to delete the enclosed object.

In a preferred embodiment, the methods and systems of the present invention are implemented on a computer system comprising a central processing unit, memory and input/output devices.

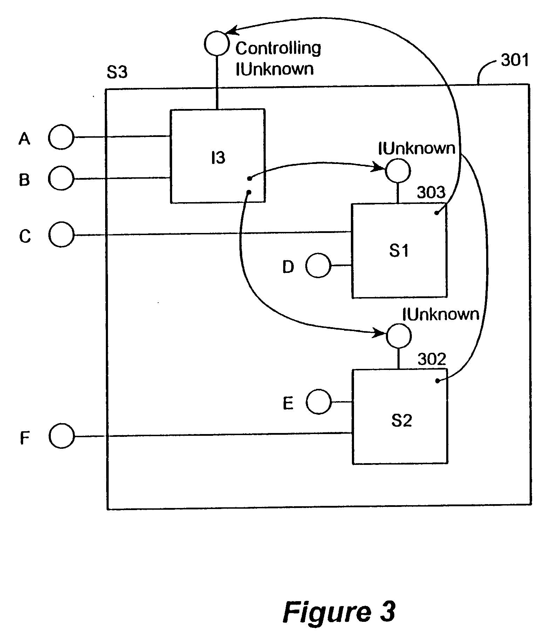

Figure 3 is a block diagram showing an aggregate object. The aggregate object S3 exposes interfaces A, B, C, F, and the controlling IUnknown. The aggregate (enclosing) object S3 comprises enclosed object S1 303, enclosed object S2 302, and implementation I3 304. The enclosed object S1 implements external interfaces C and D, and the enclosed object S2 implements external interfaces E and F. (An external interface is an interface of an object that can be exposed by an enclosing object. An internal interface is an interface of an object that cannot be exposed by an enclosing object.) The implementation I3 implements external interfaces A, B, and the controlling IUnknown. A client of the aggregate object S3 need not be aware that the object is an aggregate. The aggregate object S3 instantiates objects S1 and S2 either during construction of aggregate object S3 or at a later time. The implementation I3 contains pointers to the IUnknown interfaces of objects S1 and S2. Objects S1 and S2 are initialized to contain a pointer to the controlling IUnknown interface.

The method QueryInterface of an exposed interface can return a pointer to each exposed interface and increments the reference count of the aggregate object when a pointer is returned. The method QueryInterface of the controlling IUnknown has direct access to the pointers to the interfaces-- A, B, and controlling IUnknown --that implementation I3 implements and invokes the method QueryInterface of the IUnknown interface of the enclosed objects to retrieve pointers to the exposed interfaces -- C and F --of enclosed objects S1 and S2. When a pointer to an exposed interface is returned, the method QueryInterface of the controlling IUnknown interface increments the reference count of the aggregate object S3 by invoking the method AddRef of the controlling IUnknown interface. The method QueryInterface of each exposed interface (other than the controlling IUnknown interface) preferably invokes the method QueryInterface of the controlling IUnknown interface.

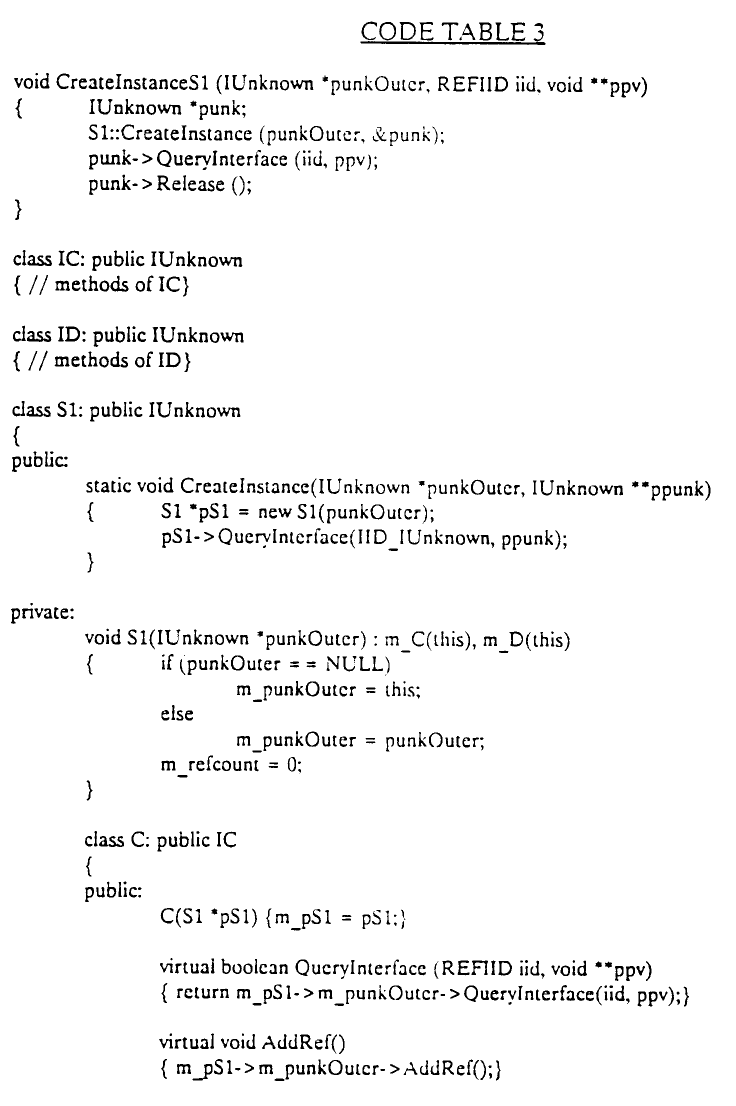

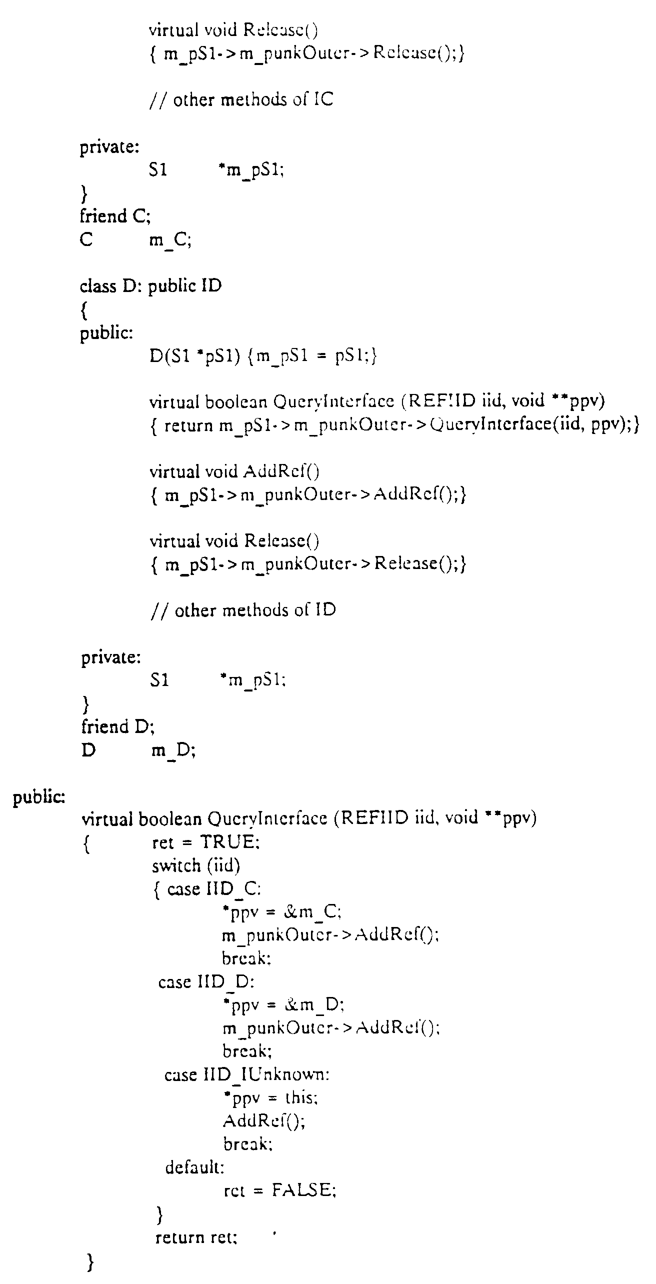

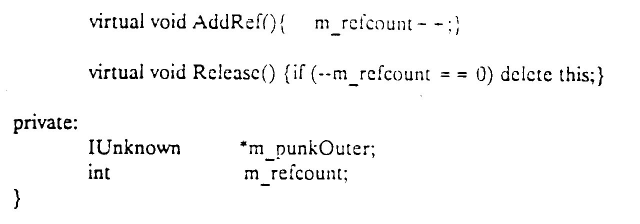

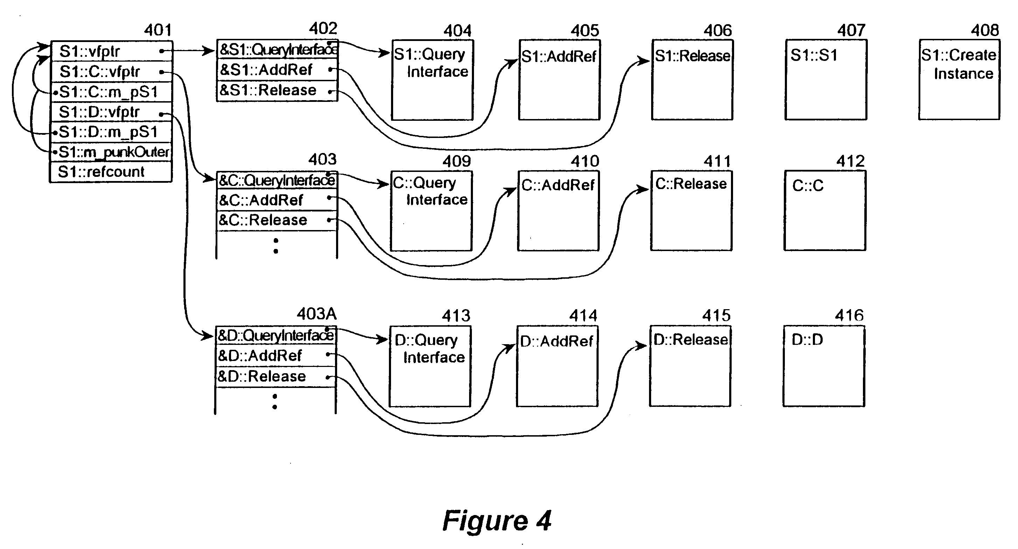

Code Table 3 contains a C++ class definition of the object S1, which can be enclosed in an aggregate (an aggregatable object) along with a global function that creates an instance of the object. The classes IUnknown, IC, and ID are interfaces that define the methods of each interface. The class S1 implements the IUnknown interface, the IC interface, and the ID interface. The class S1 implements the IC and ID interfaces as external interfaces. Figure 4 is a block diagram of the data structure layout of an instance of an object of class S1. Instance structure 401 contains the data members of class S1 (m_C, m_D, m_punkOuter, m_refcount) and a pointer the virtual function table pointer (S1::vfptr). The data members m_C and m_D are instances of an object of classes C and D, respectively. Classes C and D are friends of class S1, which allows C and D objects to access the private members of class S1. The virtual function table pointer S1::vfptr points to virtual function table 402, the virtual function table pointer within data member m_C S1::C::vfptr points to virtual function table 403, and the virtual function table pointer within data member m_D S1::D::vfptr points to virtual function table 403A. Virtual function table 402 contains pointers to the virtual functions defined for the IUnknown interface, virtual function table 403 contains pointer to the virtual functions defined for the C interface, and virtual function table 403A contains pointers to the virtual function defined for D interface. The ellipsis in virtual function tables 403 and 403A indicates pointers to additional function members of classes C and D, respectively. Functions 404 through 408 are the function members of class S1. Function 407 is the constructor for class S1. Function 408 is the function CreateInstance for class S1. Functions 409 through 412 are the function members of class C. Function 412 is the constructor for class C. Functions 413 through 416 are the function members of class D. Function 416 is the constructor for class D.

As shown in Code Table 3, the method S1::QueryInterface returns a pointer to the interface C, the interface D, or the interface IUnknown and invokes the method S1::AddRef to increment the reference count for the S1 object. The method S1::AddRef increments the reference count, and the method S1::Release decrements the reference count and deletes the S1 object when the reference count is zero.

The global function CreateInstanceS1 creates an instance of an object of class S1. A client invokes this function to instantiate an object of class S1. Thus, a client can instantiate an object of class S1 without having access to the S1 class definition at compile time or run time. The function CreateInstanceS1 is passed a pointer to the controlling IUnknown (punkOuter) when the instantiated S1 object is enclosed within an aggregate object and an identifier (iid) of an interface to return. The function CreateInstanceS1 returns a pointer (ppv) to the identified interface. The function CreateInstanceS1 invokes the method S1::CreateInstance passing the parameter punkOuter. The method S1::CreateInstance instantiates an S1 object and returns a pointer (punk) to the IUnknown interface of the S1 object. The function CreateInstanceS1 invokes the method QueryInterface of the S1 object to retrieve a pointer to the identified interface. The function CreateInstanceS1 then invokes the method Release of the S1 object because the temporary pointer punk is no longer needed.

The method S1::CreateInstance instantiates an S1 object and returns a pointer (ppunk) to the IUnknown interface of the S1 object. The method S1::CreateInstance is passed a pointer (punkOuter) to the controlling IUnknown. The method S1::CreateInstance uses operator new to instantiate the S1 object. During instantiation, the constructor S1::S1 is invoked and passed the value of the parameter punkOuter. After the S1 object is constructed, the method S1::CreateInstance invokes the method S1::QueryInterface to retrieve a pointer to the IUnknown interface of the S1 object.

The constructor S1::S1 initializes the data members m_C, m_D, m_punkOuter, and m_refcount. The constructor S1::S1 is passed the parameter punkOuter. During instantiation of the data members m_C and m_D, the constructors C::C and D::D are invoked and passed the *this* pointer for the S1 object. If the value of the parameter punkOuter is NULL, the constructor S1::S1 sets the data member m_punkOuter to the value of the *this* pointer (which points to the newly instantiated S1 object). If the value of the parameter punkOuter is non-NULL, the constructor S1::S1 sets the data member m_punkOuter to the value of parameter punkOuter. Data member m_punkOuter points to the value of the controlling IUnknown of the aggregate when the S1 object is enclosed and points to the controlling IUnknown of the S1 object when the S1 object is not enclosed. The constructor S1::S1 also initializes the data member m_refcount to zero.

The constructor C::C is passed a pointer to the S1 object. The constructor C::C stores the passed pointer in data member C::m_pS1. The data member C::m_pS1 is used by the methods of class C to access the data member S1::m_punkOuter.

The methods C::QueryInterface, C::AddRef, and C::Release invoke the corresponding methods of the IUnknown interface pointed to by data member S1::m_punkOuter, which when the S1 object is enclosed, points to the controlling IUnknown interface of the aggregate.

The constructor and other methods of class D are analogous to those of class C.

Figure 4 shows an instance of an S1 object that is not part of an aggregate. The data members S1::C::m_pS1, S1::D::m_pS1, and S1::m_punkOuter are initialized to pointer to the S1 object itself. The methods QueryInterface, AddRef, and Release of the data members m_C and m_D invoke the IUnknown methods of the interface of the S1 object.

The S2 object that implements interfaces E and F is analogous to the S1 object as described above.

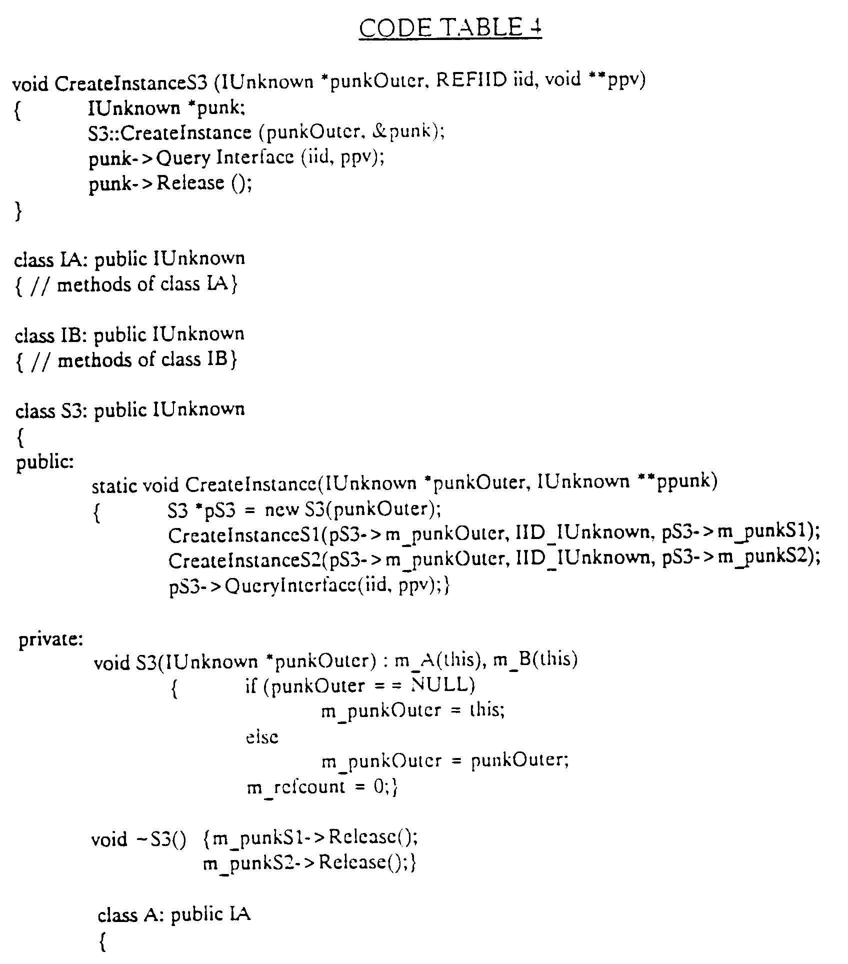

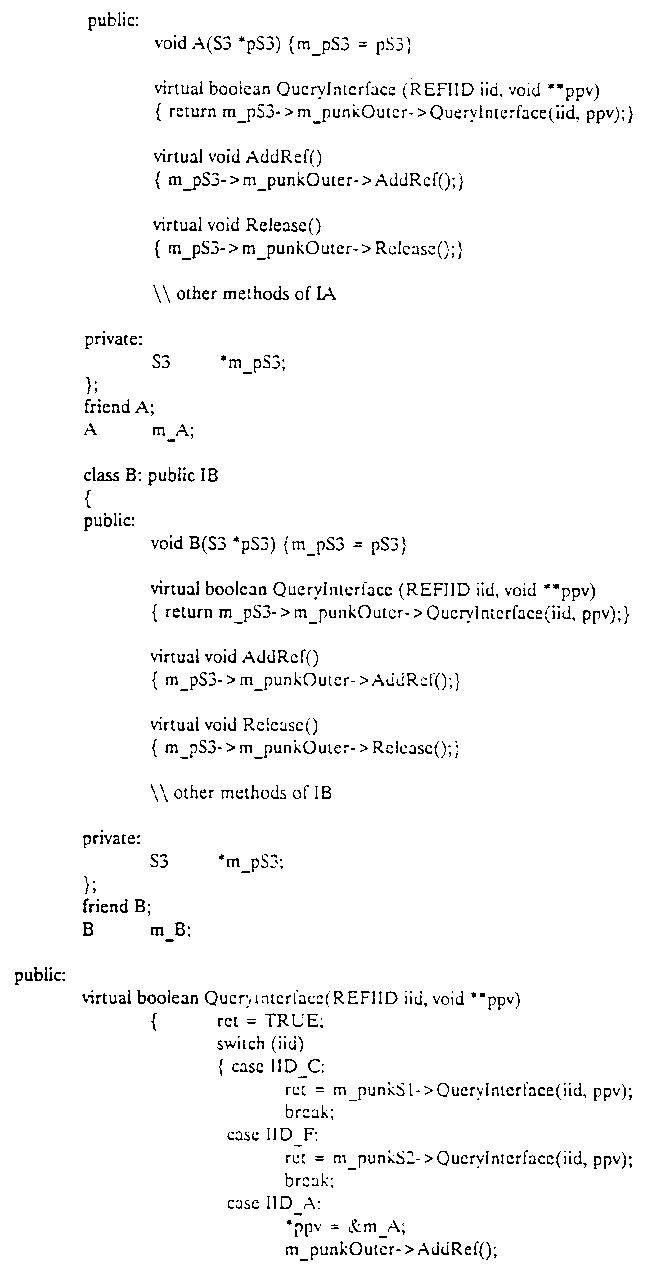

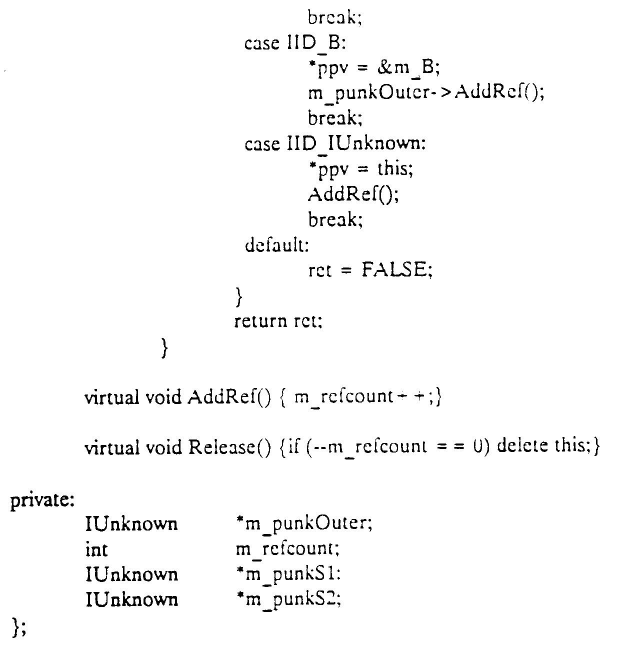

Code Table 4 is a C++ class definition of an aggregate object. The class S3 exposes the interfaces IUnknown, A, B, C, and F. To provide the C interface, the class S3 encloses an S1 object and exposes the C interface. To provide the F interface, the class S3 encloses an S2 object and exposes the F interface. The S3 object exposes the C and F interfaces by returning pointers to the C and F interfaces through the method QueryInterface of the controlling IUnknown interface. The D interface of the S1 object and the E interface of the S2 object are external interfaces, but the S3 object does not expose these interfaces.

The methods S3::QueryInterface, S3::AddRef, and S3::Release compose the controlling IUnknown interface for the aggregate. The method S3:: QueryInterface returns a pointer to the controlling IUnknown, A, B, C, or F interfaces and increments the reference count for the S3 object. The method S3::AddRef increments the reference count, and the method S3::Release decrements the reference count and deletes the S3 object when the reference count is zero.

The global function CreateInstanceS3 creates an instance of an object of class S3. A client invokes this function to instantiate an object of class S3. Thus, a client can instantiate an object of class S3 without having access to the S3 class definition at compile time or run time. The function CreateInstance S3 is passed a pointer to the controlling IUnknown interface (punkOuter) when the instantiated S3 object is enclosed within an aggregate object and an identifier (iid) of an interface exposed by the class S3 to return. The function CreateInstanceS3 returns a pointer (ppv) to the identified interface. The function CreateInstanceS3 invokes the method S3::CreateInstance passing the parameter punkOuter. The method S3::CreateInstance instantiates an S3 object and returns a pointer (punk) to the IUnknown interface of the S3 object. The function CreateInstanceS3 then invokes the method S3::QueryInterface to retrieve a pointer to the identified interface. The function CreateInstanceS3 then invokes the method S3::Release because the temporary pointer punk is no longer needed.

The method S3::CreateInstance instantiates an S3 object and returns a pointer (ppunk) to the IUnknown interface of the S3 object. The method S3::CreateInstance is passed a pointer (punkOuter) to the controlling IUnknown. The method S3::CreateInstance uses operator new to instantiate the S3 object. During instantiation, the constructor S3::S3 is invoked and passed the value of the parameter punkOuter. After the S3 object is constructed, the method S3::CreateInstance invokes the function CreateInstanceS1 to create the enclosed S1 object. The method S3::CreateInstance passes the parameter m_po1-> punkOuter and the interface identifier for the IUnknown interface and is returned a pointer to the IUnknown interface of the S1 object. The method S3::CreateInstance stores the returned pointer in data member S3::m_punkS1. The method S3::CreateInstance then invokes the function CreateInstanceS2 to create an S2 object in a manner analogous to the creation of the S1 object. The method S3::CreateInstance invokes the method S3::QueryInterface to retrieve a pointer to the interface identified by the parameter iid.

The method S3::AddRef increments the reference count of the S3 object. The method S3::Release decrements the reference count. When the reference counts is zero, the method S3::Release deletes the S3 object.

The constructor S3::S3 initializes the data members m_A, m_B, m_punkOuter, and m_refcount. The constructor S3::S3 is passed the parameter punkOuter. During instantiation of the data members m_A and m_B, the constructors A::A and B::B are invoked and passed the *this* pointer for the S3 object. If the value of the parameter punkOuter is NULL, the constructor S3::S3 sets the data member m_punkOuter to the value of the *this* pointer (which points to the newly instantiated S3 object). If the value of the parameter punkOuter is non-NULL, the constructor S3::S3 sets the data member m_punkOuter to the value of parameter punkOuter. Data member m_punkOuter points to the value of the controlling IUnknown interface of the aggregate when the S3 object is enclosed and points to the IUnknown interface of the S3 object when the S3 object is not enclosed. The constructor S3::S3 initializes the data member m_refcount to zero.

The destructor S3::∼S3 invokes the method S1::Release to decrement the reference count of the enclosed S1 object. Since the reference count was set to one during instantiation of the S1 object, the method S1::Release deletes the S1 object. The destructor S3::∼S3 decrements the reference count of the S2 object in an analogous manner.

The methods of the A and B interfaces have an analogous behavior to the methods of the C interface. Thus, the A and B interface can be exposed when an S3 object is enclosed.

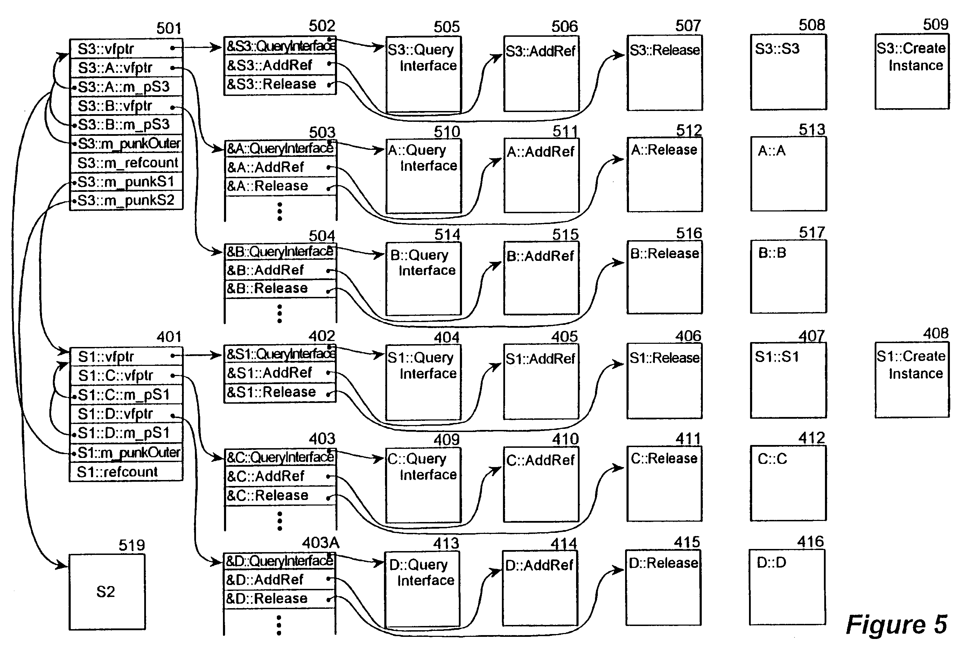

Figure 5 is a block diagram showing the data structure layout of an S3 object. The data structure layout comprises instance data 501, virtual function tables 502, 503, and 504, methods 505 through 517, and instances of an S1 object 401-416 and an S2 object 519. The instance data 501 contains a pointer to the virtual function table for the controlling IUnknown interface, data members m_A and m_B which are instances of class A and B, data member m_punkOuter which points to the IUnknown interface of the S3 object, data member m_refcount which contains the reference count for the S3 object, data member m_punkS1 which points to the IUnknown interface of the enclosed S1 object, and data member m_punkS2 which points to the IUnknown interface of the enclosed S2 object 519. When the enclosed S1 object is instantiated, its data member S1::m_punkOuter is initialized to point to the IUnknown interface of the S3 object. Similarly, when the enclosed S2 object is instantiated, its data member S2::m_punkOuter is initialized to point to the IUnknown interface of the S3 object.

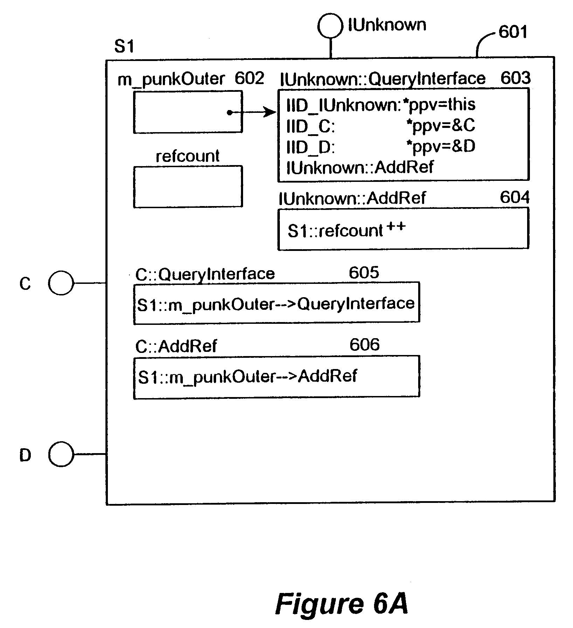

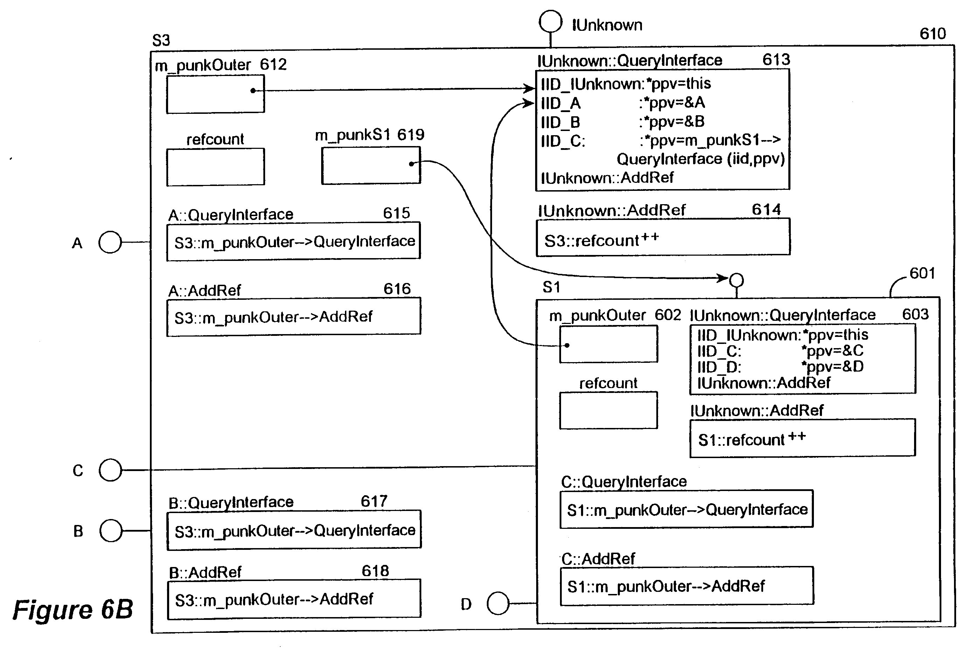

Figures 6A and 6B are block diagrams illustrating the cooperation between an enclosing object and an enclosed object. Figure 6A is a block diagram illustrating an object of class S1 that is not enclosed within another object. The class S1 object 601 includes data member m_punkOuter, which points to the IUnknown interface and methods 603, 604, 605, and 606. The method IUnknown::QueryInterface 603 returns a pointer to the requested interface and increments the reference count. The methods C::QueryInterface 605 and C::AddRef 606 invoke the corresponding methods of the IUnknown interface. The implementation of the methods of class D (not shown) are analogous to those of class C. Figure 6B is a block diagram illustrating an object of class S3 that encloses objects of class S1 and S2. The S2 object, which is analogous to the S1 object, is not shown. The data member m_punkOuter 602 of the class S1 object 601 points to the IUnknown interface of the class S3 object 610. The method IUnknown::QueryInterface 613 returns a pointer to each of the exposed objects and invokes the method IUnknown::QueryInterface 603 pointed to by data member m_punkS1 619 to retrieve a pointer to the C interface. The data member m_punkOuter 612 points to the IUnknown interface of the class S3 object 610. The methods QueryInterface 615 and 617 of the class A and B objects invoke the methods pointed to by data member m_punkOuter 612.

In the above-described embodiment of the present invention, the method QueryInterface of the controlling IUnknown interface of an aggregate invokes the method QueryInterface of the IUnknown interface of enclosed objects to retrieve pointers to the exposed interfaces. In an alternate embodiment of the present invention, an enclosing object can cache pointers to interfaces of enclosed objects that the enclosing object exposes. Thus, when the method QueryInterface of the controlling IUnknown is invoked, the method can retrieve and return the cached pointers, rather than invoke the method QueryInterface of the IUnknown interface of the enclosed object. To implement this alternate embodiment, an enclosing object defines a data member for each cached pointer. When the enclosed object is instantiated (typically during construction of the enclosing object), the method QueryInterface of the IUnknown interface of the enclosed object is invoked to retrieve a pointer of the exposed interface. It is preferred that the retrieved pointer is not reference counted so that the enclosing object effectively maintains only one pointer (e.g., S3::m_punkS1) to an enclosed object. The enclosed object can then be deleted by a single call to the method Release. Therefore, after the pointer is cached, the method Release of the IUnknown interface of the enclosed object is invoked to remove the reference count attributable to the cached pointer.

In the above-described embodiment of the present invention, the implementation of the method QueryInterface of the controlling IUnknown interface includes a switch statement that specifies which interfaces are exposed. For example, the switch statement of the method S3::QueryInterface includes a case label for each exposed interface A, B, C, F, and the controlling IUnknown. Thus, the exposed interfaces are statically defined during implementation of the enclosing object. In an alternate embodiment, the method QueryInterface of the controlling IUnknown interface can be implemented without specific knowledge of the external interfaces of the enclosed objects. When the method QueryInterface is requested to return a pointer to an interface that it does not implement, the method can invoke the method QueryInterface of the IUnknown interfaces of the enclosed objects to retrieve a pointer to the identified interface, if implemented by an enclosed object. Code Table 5 is a C++ implementation of the method QueryInterface of the controlling IUnknown of a S3 object that implements this alternate embodiment. In addition to returning a pointer to each external interface of the enclosed objects, the method QueryInterface of the controlling IUnknown could be implemented to not expose certain external interfaces, while exposing all other external interfaces.

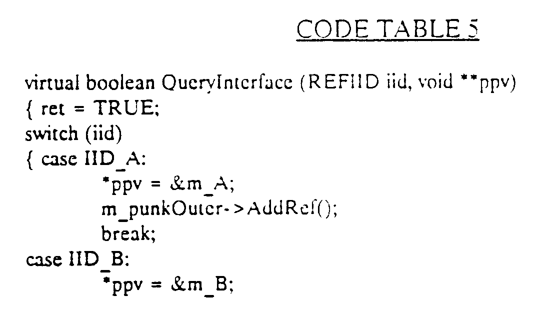

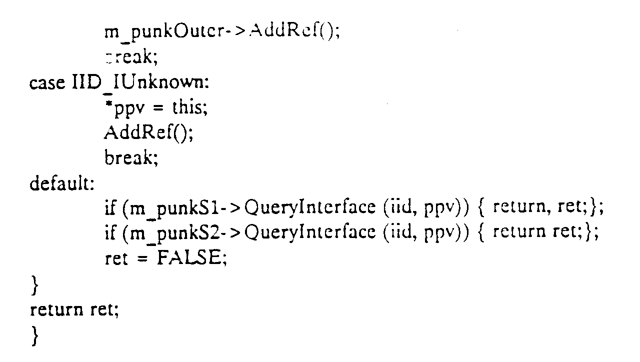

In the above-described embodiments, error checking has not been described. It is preferred that various types of error checking are performed to ensure that an aggregate is properly created. For example, if an enclosing object tries to enclose an object that is not aggregatable, then the instantiation of the enclosing object should fail (e.g., the function CreateInstanceS1 returns a flag indicating failure).

In the above-described embodiments, an aggregate object can itself be an enclosed object within an enclosing object. This enclosing (nesting) can occur to any depth. Alternately, an aggregate object can be implemented to be non-aggregable. The function CreateInstanceXX for the class XX can return a flag indicating a failure when the parameter punkOuter is non-null, that is, when aggregation is desired.
In the above-described embodiment, an object for each external interface of an aggregable object is instantiated as a data member of the aggregatee object. In an alternate embodiment, the external interfaces are inherited by the aggregable object, rather than implemented as data members of the aggregable object. Code Table 6 contains a C++ class definition S1 of an aggregable class with external interfaces C and D. The class S1 inherits the abstract classes IC and ID. The implementations of the IC and ID interfaces need not store a pointer to the derived class S1 to access the data member m_punkOuter. Conversely, the implementions of the IC and ID interfaces, as shown in Code Table 3, store the pointer to the derived class S1 in the data member m_pS1. One skilled in the art would appreciated that other implementations using inheritance of interfaces are possible.

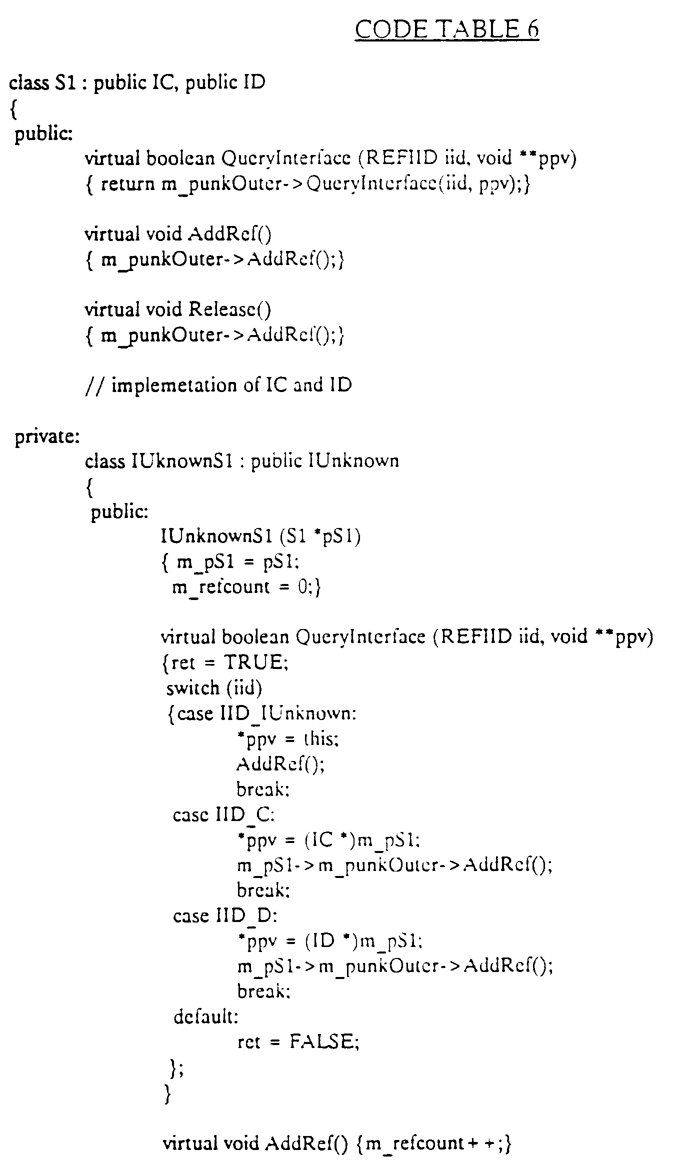

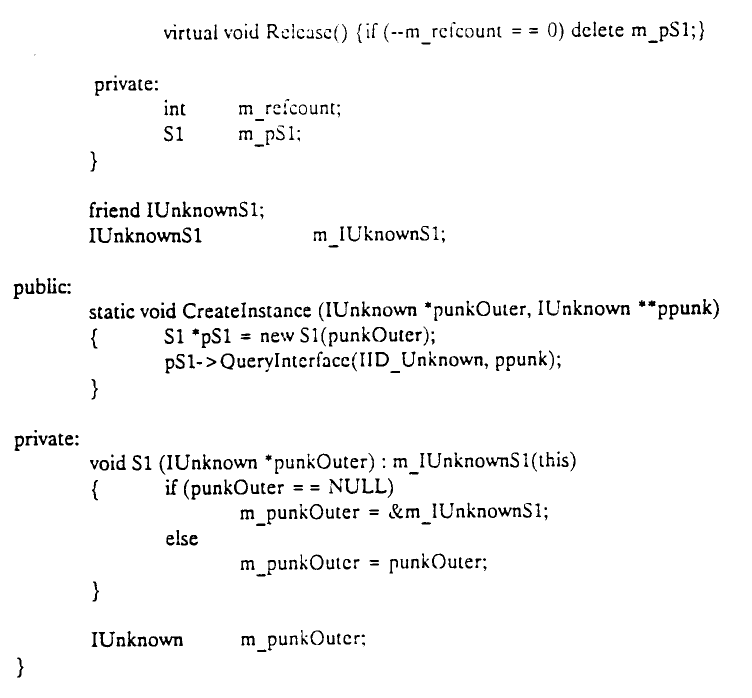

Although the present invention has been described in terms of a preferred embodiment, it is not intended that the invention be limited to his embodiment. Modifications within the spirit of the invention will be apparent to those skilled in the art. The scope of the present invention is defined by the claims which follow.

## Claims

1. A method in a computer system of enclosing an enclosed object (301,13,S1,S2) within an enclosing object (S3), the enclosing object having a query function member (IUNKNOWN), the enclosed object having a query function member (IUNKNOWN), the query function members for retrieving references to interfaces (A,B,C,F) exposed by the enclosing object, the enclosed object having an external interface that is exposed by the enclosing object, the method comprising the steps of:
instantiating the enclosing object (S3);
instantiating the enclosed object (13,S1,S2);
storing a reference to the enclosed object within the enclosing object; and
when executing the query function member of the enclosing object, invoking the query function member of the enclosed object to retrieve a reference to an exposed external interface of the enclosed object using the stored reference to the enclosed object.

2. The method of claim 1, including the step of maintaining a reference count within the enclosing object that reflects a number of references to exposed interfaces of the enclosing object.

3. The method of claim 1 including:
when executing the query function member of the enclosed object, invoking the query function member of the enclosing object to retrieve a reference to an exposed interface of the enclosing object using the stored reference to the enclosing object.

4. The method of claim 1 wherein the query function member of the enclosed object is within an object management interface and the query function member of the enclosing object is within a controlling object management interface, wherein the enclosed object has a query function member within an external interface, each query function member for receiving an identifier of an interface and for returning a reference to the identified interface, wherein the query function member of the controlling object management interface of the enclosing object receives an identifier of the external interface of the enclosed object and returns a reference to the external interface, and wherein the query function member of the external interface of the enclosed object receives an identifier of an interface, invokes the query function member of the controlling object management interface of the enclosing object passing the received identifier, and returns a reference returned by the invoked query function member of the controlling object management interface of the enclosing object as a reference to the identified interface.

5. The method of claim 4 wherein the enclosed object is an aggregate object.

6. The method of claim 4 wherein the aggregate object is not an aggregatable object.

7. The method of claim 4 wherein the query function member of the controlling object management interface of the enclosing object has no specific knowledge of the external interfaces of the enclosed object.

8. The method of claim 4 wherein the query function member of the controlling object management interface of the enclosing object has specific knowledge of an external interface of the enclosed object.

9. The method of claim 4 wherein the query function member of the controlling object management interface of the enclosing object invokes the query function member of the object management interface of the enclosed object to retrieve a reference to an external interface of the enclosed object.

10. The method of claim 4 wherein the enclosing object stores a reference to the external interface of the enclosed object and wherein the query function member of the controlling object management interface of the enclosing object returns the stored reference as the reference to the external interface of the enclosed object.

11. The method of claim 1 wherein the enclosing object has a reference count and an add reference and a release reference function member, wherein the enclosed object has an add reference and a release reference function member, including:
under control of the add reference function member of the enclosed object, invoking the add reference function member of the enclosing object, wherein the add reference function member of the enclosing object increments the reference count; and
under control of the release reference function member of the enclosed object, invoking the release reference function member of the enclosing object, wherein the release reference function member of the enclosing object decrements the reference count.

12. The method of claim 11 wherein when the reference count indicates that no references to an aggregate of the enclosing and enclosed objects exists, deleting the enclosing and enclosed objects.

13. A method in a computer system of enclosing an enclosed object (301,13,S1,S2) within an enclosing object (S3), the enclosing object having a query function member (IUNKNOWN), the enclosed object having a query function member (IUNKNOWN), the query function members for retrieving references to interfaces (A,B,C,F,) exposed by the enclosing object, the enclosed object having an external interface that is exposed by the enclosing object, the method comprising the steps of:
instantiating the enclosing object (S3);
instantiating the enclosed object (13,S1,S2);
storing a reference to the enclosed object within the enclosing object; and
when executing the query function member of the enclosed object, invoking the query function member of the enclosing object to retrieve a reference to an exposed external interface of the enclosing object using the stored reference to the enclosing object.

14. The method of claim 13, including the step of maintaining a reference count within the enclosing object that reflects a number of references to exposed interfaces of the enclosing object.

15. The method of claim 13 wherein the query function member of the enclosed object is within an object management interface and the query function member of the enclosing object is within a controlling object management interface, wherein the enclosed object has a query function member within an external interface, each query function member for receiving an identifier of an interface and for returning a reference to the identified interface, wherein the query function member of the controlling object management interface of the enclosing object receives an identifier of the external interface of the enclosed object and returns a reference to the external interface, and wherein the query function member of the external interface of the enclosed object receives an identifier of an interface, invokes the query function member of the controlling object management interface of the enclosing object passing the received identifier, and returns a reference returned by the invoked query function member of the controlling object management interface of the enclosing object as a reference to the identified interface.

16. The method of claim 15 wherein the enclosed object is an aggregate object.

17. The method of claim 15 wherein the aggregate object is not an aggregatable object.

18. The method of claim 15 wherein the query function member of the controlling object management interface of the enclosing object has no specific knowledge of the external interfaces of the enclosed object.

19. The method of claim 15 wherein the query function member of the controlling object management interface of the enclosing object has specific knowledge of an external interface of the enclosed object.

20. The method of claim 15 wherein the query function member of the controlling object management interface of the enclosing object invokes the query function member of the object management interface of the enclosed object to retrieve a reference to an external interface of the enclosed object.

21. The method of claim 15 wherein the enclosing object stores a reference to the external interface of the enclosed object and wherein the query function member of the controlling object management interface of the enclosing object returns the stored reference as the reference to the external interface of the enclosed object.

22. The method of claim 13 wherein the enclosing object has a reference count and an add reference and a release reference function member, wherein the enclosed object has an add reference and a release reference function member, including:
under control of the add reference function member of the enclosed object, invoking the add reference function member of the enclosing object, wherein the add reference function member of the enclosing object increments the reference count; and
under control of the release reference function member of the enclosed object, invoking the release reference function member of the enclosing object, wherein the release reference function member of the enclosing object decrements the reference count.

23. The method of claim 22 wherein when the reference count indicates that no references to an aggregate of the enclosing and the enclosed object exists, deleting the enclosing and enclosed objects.

24. A computer system comprising an object capable of being aggregated, the object having an object management interface, the object management interface having a query function member for receiving an identifier of an interface of the object and returning a reference to the interface, the object having an external interface with a query function member for receiving an identifier of an interface, the query function member of the external interface, responsive to receiving an identifier of an interface, invoking the query function member of the object management interface when the object is not aggregated and invoking a query function member of an enclosing object when the object is aggregated and returning a reference to the identified interface.

## Patentansprüche

1. Verfahren in einem Rechnersystem zum Einschließen eines eingeschlossenen Objekts (301, 13, S1, S2) innerhalb eines einschließenden Objekts (S3), wobei das einschließende Objekt ein Abfragefunktionselement (IUNKNOWN) aufweist und das eingeschlossene Objekt ein Abfragefunktionselement (IUNKNOWN) aufweist, wobei die Abfragefunktionselemente dem Wiederauffinden von Verweisen auf Schnittstellen (A, B, C, F) dienen, die von dem einschließenden Objekt offengelegt werden, und das eingeschlossene Objekt eine externe Schnittstelle hat, die von dem einschließenden Objekt offengelegt wird, wobei das Verfahren die folgenden Schritte aufweist:
die Instanzbildung des einschließenden Objekts (S3);
die Instanzbildung des eingeschlossenen Objekts (13, S1, S2);
das Speichern eines Verweises auf das eingeschlossene Objekt innerhalb des einschließenden Objekts und
das Aufrufen des Abfragefunktionselements des eingeschlossenen Objekts, wenn das Abfragefunktionselement des einschließenden Objekts ausgeführt wird, um einen Verweis auf eine offengelegte externe Schnittstelle des eingeschlossenen Objekts mit Hilfe des gespeicherten Verweises auf das eingeschlossene Objekt wiederzufinden.

2. Verfahren nach Anspruch 1 mit dem Schritt der Aufrechterhaltung einer Verweiszählung innerhalb des einschließenden Objekts, welche eine Anzahl von Verweisen auf offengelegte Schnittstellen des einschließenden Objekts widerspiegelt.

3. Verfahren nach Anspruch 1, welches bei der Ausführung des Abfragefunktionselements des eingeschlossenen Objekts das Abfragefunktionselement des einschließenden Objekts aufruft, um mit Hilfe des gespeicherten Verweises auf das einschließende Objekt einen Verweis auf eine offengelegte Schnittstelle des einschließenden Objekts wiederzufinden.

4. Verfahren nach Anspruch 1, wobei sich das Abfragefunktionselement des eingeschlossenen Objekts innerhalb einer Objektverwaltungsschnittstelle und das Abfragefunktionselement des einschließenden Objekts innerhalb einer Objektverwaltungs-Steuerschnittstelle befinden, wobei das eingeschlossene Objekt ein Abfragefunktionselement innerhalb einer externen Schnittstelle hat, wobei jedes Abfragefunktionselement zum Empfangen eines Identifizierungszeichens einer Schnittstelle und zum Zurücksenden eines Verweises an die identifizierte Schnittfläche dient, wobei das Abfragefunktionselement der Objektverwaltungs-Steuerschnittstelle des einschließenden Objekts ein Identifizierungszeichen der externen Schnittstelle des eingeschlossenen Objekts empfängt und einen Verweis an die externe Schnittstelle zurücksendet und wobei das Abfragefunktionselement der externen Schnittstelle des eingeschlossenen Objekts ein Identifizierungszeichen einer Schnittstelle empfängt, das Abfragefunktionselement der Objektverwaltungs-Steuerschnittstelle des einschließenden Objekts aufruft, welches das empfangene Identifizierungszeichen weiterleitet, und einen von dem aufgerufenen Abfragefunktionselement der Objektverwaltungs-Steuerschnittstelle des einschließenden Objekts zurückgeleiteten Verweis als Verweis auf die identifizierte Schnittstelle zurücksendet.

5. Verfahren nach Anspruch 4, wobei das eingeschlossene Objekt ein aggregiertes Objekt ist.

6. Verfahren nach Anspruch 4, wobei das aggregierte Objekt kein aggregierbares Objekt ist.

7. Verfahren nach Anspruch 4, wobei das Abfragefunktionselement der Objektverwaltungs-Steuerschnittstelle des einschließenden Objekts über keine spezielle Kenntnis der externen Schnittstellen des eingeschlossenen Objekts verfügt.

8. Verfahren nach Anspruch 4, wobei das Abfragefunktionselement der Objektverwaltungs-Steuerschnittstelle des einschließenden Objekts über keine spezielle Kenntnis von einer externen Schnittstelle des eingeschlossenen Objekts verfügt.

9. Verfahren nach Anspruch 4, wobei das Abfragefunktionselement der Objektverwaltungs-Steuerschnittstelle des einschließenden Objekts das Abfragefunktionselement der Objektverwaltungs-Steuerschnittstelle des eingeschlossenen Objekts dazu aufruft, einen Verweis auf eine externe Schnittstelle des eingeschlossenen Objekts wiederzufinden.

10. Verfahren nach Anspruch 4, wobei das einschließende Objekt einen Verweis auf die externe Schnittstelle des eingeschlossenen Objekts speichert und wobei das Abfragefunktionselement der Objektverwaltungs-Steuerschnittstelle des einschließenden Objekts den gespeicherten Verweis als Verweis auf die externe Schnittstelle des eingeschlossenen Objekts zurücksendet.

11. Verfahren nach Anspruch 1, wobei das einschließende Objekt eine Verweiszählung sowie ein Verweishinzufügungs- und ein Verweisfreigabe-Funktionselement aufweist und wobei das eingeschlossene Objekt ein Verweishinzufügungs- und ein Verweisfreigabe-Funktionselement aufweist, mit folgenden Schritten:
gesteuert von dem Verweishinzufügungs-Funktionselement des eingeschlossenen Objekts, das Aufrufen des Verweishinzufügungs-Funktionselements des einschließenden Objekts, wobei das Verweishinzufügungs-Funktionselement des einschließenden Objekts die Verweise inkrementiert, und
gesteuert von dem Verweisfreigabe-Funktionselement des eingeschlossenen Objekts, das Aufrufen des Verweisfreigabe-Funktionselements des einschließenden Objekts, wobei das Verweisfreigabe-Funktionselement des einschließenden Objekts die Verweise dekrementiert.

12. Verfahren nach Anspruch 11, wobei dann, wenn die Verweiszählung angibt dass keine Verweise auf eine Gruppierung aus dem einschließenden und dem eingeschlossenen Objekt vorhanden sind, das einschließende und das eingeschlossene Objekt gelöscht werden.

13. Verfahren in einem Rechnersystem zum Einschließen eines eingeschlossenen Objekts (301, 13, S1, S2) innerhalb eines einschließenden Objekts (S3), wobei das einschließende Objekt ein Abfragefunktionselement (IUNKNOWN) aufweist und das eingeschlossene Objekt ein Abfragefunktionselement (IUNKNOWN) aufweist, wobei die Abfragefunktionselemente dem Wiederauffinden von Verweisen auf Schnittstellen (A, B, C, F) dienen, die von dem einschließenden Objekt offengelegt werden, und das eingeschlossene Objekt eine externe Schnittstelle hat, die von dem einschließenden Objekt offengelegt wird, wobei das Verfahren die folgenden Schritte aufweist:
die Instanzbildung des einschließenden Objekts (S3);
die Instanzbildung des eingeschlossenen Objekts (13, S1, S2); das Speichern eines Verweises auf das eingeschlossene Objekt innerhalb des einschließenden Objekts und
das Aufrufen des Abfragefunktionselements des einschließenden Objekts, wenn das Abfragefunktionselement des eingeschlossenen Objekts ausgeführt wird, um einen Verweis auf eine offengelegte externe Schnittstelle des einschließenden Objekts mit Hilfe des gespeicherten Verweises auf das einschließende Objekt wiederzufinden.

14. Verfahren nach Anspruch 13 mit dem Schritt des Aufrechterhaltens einer Verweiszählung innerhalb des einschließenden Objekts, welche eine Anzahl von Verweisen auf offengelegte Schnittstellen des einschließenden Objekts widerspiegelt.

15. Verfahren nach Anspruch 13, wobei sich das Abfragefunktionselement des eingeschlossenen Objekts innerhalb einer Objektverwaltungsschnittstelle und das Abfragefunktionselement des einschließenden Objekts innerhalb einer Objektverwaltungs-Steuerschnittstelle befinden, wobei das eingeschlossene Objekt ein Abfragefunktionselement innerhalb einer externen Schnittstelle hat, wobei jedes Abfragefunktionselement zum Empfangen eines Identifizierungszeichens einer Schnittstelle und zum Zurücksenden eines Verweises an die identifizierte Schnittfläche dient, wobei das Abfragefunktionselement der Objektverwaltungs-Steuerschnittstelle des einschließenden Objekts ein Identifizierungszeichen der externen Schnittstelle des eingeschlossenen Objekts empfängt und einen die externe Schnittstelle zurücksendet und wobei das Abfragefunktionselement der externen Schnittstelle des eingeschlossenen Objekts ein Identifizierungszeichen einer Schnittstelle empfängt, das Abfragefunktionselement der Objektverwaltungs-Steuerschnittstelle des einschließenden Objekts aufruft, welches das empfangene Identifizierungszeichen weiterleitet, und einen von dem aufgerufenen Abfragefunktionselement der Objektverwaltungs-Steuerschnittstelle des einschließenden Objekts zurückgeleiteten Verweis als Verweis auf die identifizierte Schnittstelle zurücksendet.

16. Verfahren nach Anspruch 15, wobei das eingeschlossene Objekt ein aggregiertes Objekt ist.

17. Verfahren nach Anspruch 15, wobei das aggregierte Objekt kein aggregierbares Objekt ist.

18. Verfahren nach Anspruch 15, wobei das Abfragefunktionselement der Objektverwaltungs-Steuerschnittstelle des einschließenden Objekts über keine spezielle Kenntnis der externen Schnittstellen des eingeschlossenen Objekts verfügt.

19. Verfahren nach Anspruch 15, wobei das Abfragefunktionselement der Objektverwaltungs-Steuerschnittstelle des einschließenden Objekts über keine spezielle Kenntnis von einer externen Schnittstelle des eingeschlossenen Objekts verfügt.

20. Verfahren nach Anspruch 15, wobei das Abfragefunktionselement der Objektverwaltungs-Steuerschnittstelle des einschließenden Objekts das Abfragefunktionselement der Objektverwaltungsschnittstelle des eingeschlossenen Objekts dazu aufruft, einen Verweis auf eine externe Schnittstelle des eingeschlossenen Objekts wiederzufinden.

21. Verfahren nach Anspruch 15, wobei das einschließende Objekt einen Verweis auf die externe Schnittstelle des eingeschlossenen Objekts speichert und wobei das Abfragefunktionselement der Objektverwaltungs-Steuerschnittstelle des einschließenden Objekts den gespeicherten Verweis als Verweis auf die externe Schnittstelle des eingeschlossenen Objekts zurücksendet.

22. Verfahren nach Anspruch 13, wobei das einschließende Objekt eine Verweiszählung sowie ein Verweishinzufügungs- und ein Verweisfreigabe-Funktionselement aufweist und wobei das eingeschlossene Objekt ein Verweishinzufügungs- und ein Verweisfreigabe-Funktionselement aufweist, mit folgenden Schritten:
gesteuert von dem Verweishinzufügungs-Funktionselement des eingeschlossenen Objekts, das Aufrufen des Verweishinzufügungs-Funktionselements des einschließenden Objekts, wobei das Verweishinzufügungs-Funktionselement des einschließenden Objekts die Verweise inkrementiert, und
gesteuert von dem Verweisfreigabe-Funktionselement des eingeschlossenen Objekts, das Aufrufen des Verweisfreigabe-Funktionselements des einschließenden Objekts, wobei das Verweisfreigabe-Funktionselement des einschlie ßenden Objekts die Verweise dekrementiert.

23. Verfahren nach Anspruch 22, wobei dann, wenn die Verweiszählung angibt, dass keine Verweise auf eine Gruppierung aus dem einschließenden und dem eingeschlossenen Objekt vorhanden sind, das einschließende und das eingeschlossene Objekt gelöscht werden.

24. Rechnersystem mit einem Objekt, welches aggregiert werden kann, wobei das Objekt eine Objektverwaltungsschnittstelle aufweist, wobei die Objektverwaltungsschnittstelle über ein Abfragefunktionselement zum Empfangen eines Identifizierungszeichens einer Schnittstelle des Objekts und zum Zurücksenden eines Verweises auf die Schnittstelle verfügt, wobei das Objekt eine externe Schnittstelle mit einem Abfragefunktionselement zum Empfangen eines Identifizierungszeichens einer Schnittstelle hat, wobei das Abfragefunktionselement der externen Schnittstelle auf den Empfang eines Identifizierungszeichens einer Schnittstelle reagiert und das Abfragefunktionselement der Objektverwaltungsschnittstelle aufruft, wenn das Objekt nicht aggregiert ist, und Abfragefunktionselement eines einschließenden Objekts aufruft, wenn das Objekt aggregiert ist, und einen Verweis auf die identifizierte Schnittstelle zurücksendet.

## Revendications

1. Procédé, dans un système d'ordinateur, pour délimiter un objet délimité (301, 13, S1, S2) au sein d'un objet de délimitation (S3), l'objet de délimitation ayant un élément de fonction d'interrogation (IUNKNOWN), l'objet délimité ayant un élément de fonction d'interrogation (IUNKNOWN), les éléments de fonction d'interrogation pour extraire des références aux interfaces (A, B, C, F) exposées par l'objet de délimitation, l'objet délimité ayant une interface externe qui est exposée par l'objet de délimitation, le procédé comprenant les étapes consistant :
à instancier l'objet de délimitation (S3) ;
à instancier l'objet délimité (13, S1, S2) ;
à mémoriser une référence à l'objet délimité au sein de l'objet de délimitation ; et
lors de l'exécution de l'élément de fonction d'interrogation de l'objet de délimitation, à appeler l'élément de fonction d'interrogation de l'objet délimité pour extraire une référence à une interface externe exposée de l'objet délimité en utilisant la référence mémorisée à l'objet délimité.

2. Procédé selon la revendication 1, incluant l'étape consistant à maintenir un comptage de références au sein de l'objet de délimitation qui reflète un nombre de références aux interfaces exposées de l'objet de délimitation.

3. Procédé selon la revendication 1, incluant :
lors de l'exécution de l'élément de fonction d'interrogation de l'objet délimité, l'étape consistant à appeler l'élément de fonction d'interrogation de l'objet de délimitation pour extraire une référence à une interface exposée de l'objet de délimitation en utilisant la référence mémorisée à l'objet de délimitation.

4. Procédé selon la revendication 1, dans lequel l'élément de fonction d'interrogation de l'objet délimité se trouve au sein d'une interface de gestion d'objet et l'élément de fonction d'interrogation de l'objet de délimitation se trouve au sein d'une interface de gestion d'objet de commande, dans lequel l'objet délimité a un élément de fonction d'interrogation au sein d'une interface externe, chaque élément de fonction d'interrogation pour recevoir un identificateur d'une interface et pour renvoyer une référence à l'interface identifiée, dans lequel l'élément de fonction d'interrogation de l'interface de gestion d'objet de commande de l'objet de délimitation reçoit un identificateur de l'interface externe de l'objet délimité et renvoie une référence à l'interface externe, et dans lequel l'élément de fonction d'interrogation de l'interface externe de l'objet délimité reçoit un identificateur d'une interface, appelle l'élément de fonction d'interrogation de l'interface de gestion d'objet de commande de l'objet de délimitation transmettant l'identificateur reçu, et renvoie une référence renvoyée par l'élément de fonction d'interrogation appelé de l'interface de gestion d'objet de commande de l'objet de délimitation en tant que référence à l'interface identifiée.

5. Procédé selon la revendication 4, dans lequel l'objet délimité est un objet d'agrégat.

6. Procédé selon la revendication 4, dans lequel l'objet d'agrégat n'est pas un objet pouvant être agrégé.

7. Procédé selon la revendication 4, dans lequel l'élément de fonction d'interrogation de l'interface de gestion d'objet de commande de l'objet de délimitation n'a aucune connaissance spécifique des interfaces externes de l'objet délimité.

8. Procédé selon la revendication 4, dans lequel l'élément de fonction d'interrogation de l'interface de gestion d'objet de commande de l'objet de délimitation a une connaissance spécifique d'une interface externe de l'objet délimité.

9. Procédé selon la revendication 4, dans lequel l'élément de fonction d'interrogation de l'interface de gestion d'objet de commande de l'objet de délimitation appelle l'élément de fonction d'interrogation de l'interface de gestion d'objet de l'objet délimité pour extraire une référence à une interface externe de l'objet délimité.

10. Procédé selon la revendication 4, dans lequel l'objet de délimitation mémorise une référence à l'interface externe de l'objet délimité et dans lequel l'élément de fonction d'interrogation de l'interface de gestion d'objet de commande de l'objet de délimitation renvoie la référence mémorisée en tant que référence à l'interface externe de l'objet délimité.

11. Procédé selon la revendication 1, dans lequel l'objet de délimitation a un comptage de références et un élément de fonction de référence d'addition et un élément de fonction de référence de dégagement, dans lequel l'objet délimité a un élément de fonction de référence d'addition et un élément de fonction de référence de dégagement, incluant :
sous la commande de l'élément de fonction de référence d'addition de l'objet délimité, l'étape consistant à appeler l'élément de fonction de référence d'addition de l'objet de délimitation, dans lequel l'élément de fonction de référence d'addition de l'objet de délimitation incrémente le comptage de références ; et
sous la commande de l'élément de fonction de référence de dégagement de l'objet délimité, l'étape consistant à appeler l'élément de fonction de référence de dégagement de l'objet de délimitation, dans lequel l'élément de fonction de référence de dégagement de l'objet de délimitation décrémente le comptage de références.

12. Procédé selon la revendication 11, dans lequel, lorsque le comptage de références indique que n'existe aucune référence à un agrégat des objets de délimitation et délimité, est incluse l'étape consistant à supprimer les objets de délimitation et délimité.

13. Procédé, dans un système d'ordinateur, pour délimiter un objet délimité (301, 13, S1, S2) au sein d'un objet de délimitation (S3), l'objet de délimitation ayant un élément de fonction d'interrogation (IUNKNOWN), l'objet délimité ayant un élément de fonction d'interrogation (IUNKNOWN), les éléments de fonction d'interrogation pour extraire des références aux interfaces (A, B, C, F) exposées par l'objet de délimitation, l'objet délimité ayant une interface externe qui est exposée par l'objet de délimitation, le procédé comprenant les étapes consistant :
à instancier l'objet de délimitation (S3) ;
à instancier l'objet délimité (13, S1, S2) ;
à mémoriser une référence à l'objet délimité au sein de l'objet de délimitation et
lors de l'exécution de l'élément de fonction d'interrogation de l'objet délimité, à appeler l'élément de fonction d'interrogation de l'objet de délimitation pour extraire une référence à une interface externe exposée de l'objet de délimitation en utilisant la référence mémorisée à l'objet de délimitation.

14. Procédé selon la revendication 13, incluant l'étape consistant à maintenir un comptage de références au sein de l'objet de délimitation qui reflète un nombre de références aux interfaces exposées de l'objet de délimitation.

15. Procédé selon la revendication 13, dans lequel l'élément de fonction d'interrogation de l'objet délimité se trouve au sein d'une interface de gestion d'objet et l'élément de fonction d'interrogation de l'objet de délimitation se trouve au sein d'une interface de gestion d'objet de commande, dans lequel l'objet délimite a un élément de fonction d'interrogation au sein d'une interface externe, chaque élément de fonction d'interrogation pour recevoir un identificateur d'une interface et pour renvoyer une référence à l'interface identifiée, dans lequel l'élément de fonction d'interrogation de l'interface de gestion d'objet de commande de l'objet de délimitation reçoit un identificateur de l'interface externe de l'objet délimité et renvoie une référence à l'interface externe, et dans lequel l'élément de fonction d'interrogation de l'interface externe de l'objet délimité reçoit un identificateur d'une interface, appelle l'élément de fonction d'interrogation de l'interface de gestion d'objet de commande de l'objet de délimitation transmettant l'identificateur reçu, et renvoie une référence renvoyée par l'élément de fonction d'interrogation appelé de l'interface de gestion d'objet de commande de l'objet de délimitation en tant que référence à l'interface identifiée.

16. Procédé selon la revendication 15, dans lequel l'objet délimité est un objet d'agrégat.

17. Procédé selon la revendication 15, dans lequel l'objet d'agrégat n'est pas un objet pouvant être agrégé.

18. Procédé selon la revendication 15, dans lequel l'élément de fonction d'interrogation de l'interface de gestion d'objet de commande de l'objet de délimitation n'a aucune connaissance spécifique des interfaces externes de l'objet délimité.

19. Procédé selon la revendication 15, dans lequel l'élément de fonction d'interrogation de l'interface de gestion d'objet de commande de l'objet de délimitation a une connaissance spécifique d'une interface externe de l'objet délimité.

20. Procédé selon la revendication 15, dans lequel l'élément de fonction d'interrogation de l'interface de gestion d'objet de commande de l'objet de délimitation appelle l'élément de fonction d'interrogation de l'interface de gestion d'objet de l'objet délimité pour extraire une référence à une interface externe de l'objet délimité.

21. Procédé selon la revendication 15, dans lequel l'objet de délimitation mémorise une référence à l'interface externe de l'objet délimité et dans lequel l'élément de fonction d'interrogation de l'interface de gestion d'objet de commande de l'objet de délimitation renvoie la référence mémorisée en tant que référence à l'interface externe de l'objet délimité.

22. Procédé selon la revendication 13, dans lequel l'objet de délimitation a un comptage de références et un élément de fonction de référence d'addition et un élément de fonction de référence de dégagement, dans lequel l'objet délimité a un élément de fonction de référence d'addition et un élément de fonction de référence de dégagement, incluant :
sous la commande de l'élément de fonction de référence d'addition de l'objet délimité, l'étape consistant à appeler l'élément de fonction de référence d'addition de l'objet de délimitation, dans lequel l'élément de fonction de référence d'addition de l'objet de délimitation incrémente le comptage de références ; et
sous la commande de l'élément de fonction de référence de dégagement de l'objet délimité, l'étape consistant à appeler l'élément de fonction de référence de dégagement de l'objet de délimitation, dans lequel l'élément de fonction de référence de dégagement de l'objet de délimitation décrémente le comptage de références.

23. Procédé selon la revendication 22, dans lequel, lorsque le comptage de références indique qu'il n'existe aucune référence à un agrégat des objets de délimitation et délimité, est incluse l'étape consistant à supprimer les objets de délimitation et délimité.

24. Système d'ordinateur comprenant un objet pouvant être agrégé, l'objet ayant une interface de gestion d'objet, l'interface de gestion d'objet ayant un élément de fonction d'interrogation pour recevoir un identificateur d'une interface de l'objet et renvoyant une référence à l'interface, l'objet ayant une interface externe avec un élément de fonction d'interrogation pour recevoir un identificateur d'une interface, l'élément de fonction d'interrogation de l'interface externe, sensible à la réception d'un identificateur d'une interface, appelant l'élément de fonction d'interrogation de l'interface de gestion d'objet lorsque l'objet n'est pas agrégé et appelant un élément de fonction d'interrogation d'un objet de délimitation lorsque l'objet est agrégé et renvoyant une référence à l'interface identifiée.
